# EUROPEAN PATENT APPLICATION

(11) **EP 3 944 765 A1**
(43) Date of publication of application: **02.02.2022**
(21) Application number: 21382650.6
(22) Date of filing: 19.07.2021
(51) Int. Cl.: A23B 7/144, A23B 7/148, B65D 81/20

(54) **METHOD, SYSTEM AND COMPOSITION FOR THE TREATMENT OF TUBERS AFFECTED BY THE PEST THE GUATEMALAN POTATO MOTH (TECIA SOLANIVORA)**

(30) Priority: 27.07.2020 ES 202030781
(71) Applicant: GMR Canarias Sau, 38108 Santa Cruz de Tenerife (ES); Cabildo Insular De Tenerife, 38003 Santa Cruz de Tenerife (ES); Instituto Canario de Investigaciones Agrarias (ICIA), 38003 Santa Cruz de Tenerife (ES)
(72) Inventor: LOBO RODRIGO, Maria Gloria, SANTA CRUZ DE TENERIFE (ES); GONZÁLEZ GARCÍA, Cristina J., SANTA CRUZ DE TENERIFE (ES); RÍOS MESA, Domingo J., SAN CRISTÓBAL DE LA LAGUNA (ES)
(74) Representative: Herrero & Asociados, S.L.

(57) **Abstract**

A method, a system and a composition for the treatment of *potato* tubers affected by organisms of the type of the Guatemalan potato moth are described, with a view to eliminating the incidence of this infestation in the affected tubers. The method comprises arranging certain quantities of tubers, introduced into drawers, inside an airtight treatment space and modifying the atmosphere of said space, in a controlled manner, with the application of a gaseous treatment composition. The system includes an installation with physical devices intended to perform the mixing of gases supplied from respective pressure vessels with the air in the airtight space to obtain the treatment composition in a controlled manner by means of control circuitry included in a regulation and control cabinet, and the provision of said composition to the space where the drawers with the tubers are located, the gaseous composition for the treatment of the tubers being composed of a mixture of CO₂, O and N₂.

## Description

### Technical field of the invention

The present invention relates to a method for treating tubers, in particular for treating the pests affecting potato tubers, and more especially potatoes with designation of origin colloquially known as "Papas Antiguas Canarias" (Old Canary Island Potatoes) against infestation produced by the proliferation of the organisms known as the Guatemalan potato moth (*Teciasolanivora*)*.*

The invention also relates to a system designed to carry out the previously defined treatment, which includes an installation for applying the aforementioned treatment.

Additionally, the invention also relates to a gaseous composition to create a modified and controlled atmosphere in an enclosed space chosen for the application of the treatment in the installation of the invention, the composition of which has been shown to exhibit characteristics particularly suitable for the treatment for which it is intended.

The technical field in which the present invention is inscribed is included in the industrial sector dedicated to combatting infestations caused in potato tubers by the pest known as the Guatemalan potato moth, during the cultivation, harvest and storage of the product.

### Background of the invention

The Guatemalan potato moth (*TeciasolanivoraPovolny*) is a lepidopteran of the family *Gelichiidae,* belonging to the complex of moths that attack potato tubers (Ramírez, 2010). *Teciasolanivorais* considered one of the most important potato tuber pests in Central and South America, where it originates. The first damage was recorded in 1956 in Guatemala. It was first described in Costa Rica in 1973 (Povolny, 1973).

This moth is considered to be the cause of significant economic losses in potato production in the affected areas. In 1999, it was first observed in Spain, specifically on the island of Tenerife (Canary Islands), in potato crops and warehouses in the north of Tenerife, although it was not identified as such in the Archipelago until 2000, and it was subsequently located in potato warehouses on the islands of La Gomera, Lanzarote and Gran Canaria. The pest was declared to exist in the Canary Islands by publication in Official Gazette No. 131 of 4.10.2002. By order dated 7 November 2002 from the Government of the Canary Islands Ministry of Agriculture, Livestock, Fisheries and Food, phytosanitary measures were established for the eradication and control of *"Ralstonia solanacearum* (Smith) Yabuuchi et al." on the island of La Palma and of "*Teciasolanivora*Povolny" throughout the territory of the Autonomous Community of the Canary Islands, both in the cultivation of potatoes (see Official Gazette No 153 of 18.11.2002).

Finally, *Teciasolanivora* was included in ANNEX II, PART A on a list of harmful organisms whose introduction and spread should be prohibited in all Member States, if they are present in certain plants or plant products, according to amendments of ORDER ARM/1671/2009 of 16 June 2009 referring to RD 58/2005 of 21 January, which makes it impossible to export the potatoes.

The varieties of Papas Antiguas de Canarias constitute a product of high culinary value since, in recent years, due to the significant value attributed to these potatoes as a product with a designation of origin and distinctive quality, demand has increased from distributors, gourmets, etc., not only in the island markets, but also in the peninsular and European markets.

This product brings together a number of features that make it:
- Unique: Due to its age, since the first reference dates back to 1567, due to its ability to adapt to the islands' environments, due to its morphological diversity such as the colour of the skin and the flesh that distinguish it from a white potato.
- Nutritious: due to a dry matter content of more than 22%, and its content in bioactive compounds both in the skin and in the flesh.
- Emblematic of Canarian culture: for being part of the most traditional recipe in our culinary baggage, "wrinkled potatoes with mojo", available in every restaurant on our islands and demanded and appreciated by islanders and foreigners.
- Unique: because it helps maintain the islands' agricultural biodiversity and prevents the loss of genetic resources.

The presence of *Teciasolanivora* (Guatemalan potato moth) in the Canary Islands has led to significant losses in potato cultivation. This moth is considered a quarantine organism, and, as there is no registered phytosanitary or cultural practice to eradicate the pest in the field, the application of a post-harvest treatment to eliminate the insect at some stage of its development during storage and marketing becomes indispensable. *Teciasolanivora* was included in Annex II, Part A of harmful organisms the introduction and spread of which should be prohibited in all European Member States, if they occur in certain plants or plant products as amended by ORDER ARM/1671/2009 of 16 June 2009 referring to RD 5872005 of 21 January, which lays down protective measures against the introduction and spread within the national territory and the European Community of organisms harmful to plants or plant products, as well as for export and transit to third countries.

There are numerous quarantine treatments that are used in order to ensure that the treated product is free from pests. Including: fumigation with methyl bromide (8 - 64 g/m³), storage at low temperatures (-0.5 - 2 °C for between 7 and 40 days), thermal treatment by immersion or with water vapour or with forced air (43 - 50 °C for between 0.3 and 14 h), irradiation (150 - 400 Gy), microwave (915 - 2450 MHz), radiofrequency (13 - 40 MHz) and the use of controlled atmospheres (with low oxygen or high carbon dioxide levels). Sometimes, it is essential to combine these treatments so that their effectiveness in killing almost 100% of the insects, does not affect the quality of the product treated (Lobo et al, 2011).

Quarantine treatments are applied to exported tubers to prevent the spread of pests or insects to the countries that import these products (Queb and Lopez, 2014). It is therefore necessary to develop post-harvest management programmes to minimise losses, preserve fresh product quality, and ensure a better economic return (Ladaniya, 2008).

Quarantine treatments are used to prevent the spread of endemic insect pests from the countries of origin to a product's destination country. The accreditation of new quarantine methods requires standards to verify the effectiveness of the treatment. Probit 9 mortality is a standard for treatment effectiveness that has been adopted by the U.S. Department of Agriculture. Subsequently, this method has been used as a reference model for many quarantine treatments around the world. This name originates from the statistical method (Probit analysis) used to derive the relationship between the dose and its response. A response at the Probit 9 level results in a mortality rate of 99.9968% mortality as a basis for approving quarantine treatments (Lobo et al, 2011).

Unlike other insects, under field conditions, the eggs of *Teciasolanivora* are found in the ground, the prepupae and pupae in the upper part of the soil and the adult in the aerial part. During harvesting and storage, the tubers are exposed to the adults that can lay their eggs on the surface of the potato. Therefore, in the stored tubers we find eggs on their surface and larvae inside, since the prepupae do not have soil in which to pupate and this phase is carried out on any surface they find (walls, boxes, hardstanding, sacks, etc.) as well as on the surface of the tuber itself (Lobo et al, 2011).

Between 2002 and 2006, preliminary studies carried out by the University of La Laguna, the ICIA and the Island Council of Tenerife, on the treatment of tubers infested by *Teciasolanivora,* demonstrated that the effectiveness of the non-polluting physical-chemical treatments tested (immersion in hot water, microwaves, thermal shocks, and saturated carbon dioxide atmosphere) was variable (Lobo et al, 2011). In fact, the results of these trials show that the treatments evaluated on the infested tubers do not completely eliminate the larvae from inside them, although they achieve a considerable reduction (50%), with the exception of CO₂, which causes a mortality of 100% (Lobo et al, 2011). Beginning in 2008, the research was directed towards the application of a controlled CO₂ atmosphere, as this was considered to be a good alternative to traditional products, in addition to being a cleaner environmental technology without toxicological risks. CO₂ affects several physiological, metabolic, biological and behavioural characteristics of the insects. It has, thus, been observed that the use of CO₂ alone affects some of the physiological, biological and behavioural characteristics of the insects. One of the main causes of CO₂ toxicity in insects is the effect it has on stimulating the opening of the spiracles that regulate respiration. This indirectly induces the loss of water and the subsequent dehydration of the insect. It also produces acidification in the internal fluids, causing modifications in many of the insect's metabolic pathways, affecting growth, development and reproduction. However, it should be noted that exposing the *potato* to this gas (CO₂) can produce physiological disorders (internal and external darkening, spotting, etc.), as well as affecting the organoleptic characteristics of the tuber, while when applied to seed *potatoes,* it can affect sprouting or chitting.

It follows from the foregoing that there exists in the state of the art a need to establish a process to treat potatoes against the Guatemalan potato moth, to build an adequate facility for the application of said treatment, and also to develop compositions and products that can be effective in combating the Guatemalan potato moth pest of potato tubers without affecting the organoleptic and/or food properties of the tuber.

### Brief description of the invention

Taking into account the foregoing, the present invention has developed a method, an installation and a composition particularly suitable for its application to tubers affected by the Guatemalan potato moth *(Teciasolanivora),* by means of which the drawbacks affecting the known treatments mentioned above are remedied, and by means of which the potato tubers are freed from the presence of *Teciasolanivora* (Guatemalan potato moth).

To this end, a first object of the present invention is to provide a method by which a process of applying a composition specifically developed to combat the aforementioned organisms is carried out. This method comprises determining an airtight enclosed space of varying proportions depending on the load; arranging a volume of tubers (specifically Canary Island potato tubers or other potato tubers) within said space, included in a number of plastic boxes or other drawers, with openings or spacings to allow sufficient contact between the tubers inside the boxes or drawers with the atmosphere in the location space, with the boxes or drawers advantageously distributed and/or stacked on the ground in groups with a predetermined number of units, on pallets or otherwise accumulated; applying to the interior of the location space containing the tubers, a treatment composition to create a controlled, modified atmosphere, in contact with said tubers, and keeping the tubers inside the enclosed space, in contact with the treatment composition, for a pre-established period of time.

A second object of the present invention consists of a system by means of which an installation is provided which allows the method described above to be carried out, the installation of which comprises a set of container vessels, in particular two container vessels enclosing respective gases which, in combination with the atmospheric air existing inside the treatment space, integrate the composition used in the treatment of the tubers, where each vessel or container is connected to a supply conduit, through a respective passage control valve for the regulation of the relative proportions of each of the gases contained in both containers, the flow rate of each gas being controlled from the circuitry duly programmed and included in a regulation and control cabinet that is equipped with at least a data display screen and a keypad to interact with the person in charge of controlling the operation, and where provision has also been made for the installation in the airtight treatment space of one or more sensors responsible for detecting the proportion of each of the gases that make up the treatment composition and communicating this to the circuitry of the control unit installed inside said regulation and control cabinet in order to compensate for any imbalances that may occur. The system also includes the installation of a means for maintaining the temperature at the values previously determined for the treatment.

A third object of the present invention consists of the development of a composition, obtained from the mixture of three different gases, namely CO₂, O₂ and N₂, in suitable and adjustable proportions, of specific application to effectively combat the effects of the Guatemalan potato moth on the tubers, and in particular on the Canarian potato or other *potatoes,* and of which at least two gases, in particular O₂ and CO₂ are supplied from pressurised vessels located outside the treatment space, and where the third gas (N₂) is present in the air existing within the space of the airtight treatment enclosure, the O₂ and CO₂ being supplied from their corresponding vessels or containers until the desired combination is reached, controlled by means of a sensor included in the installation system.

### Brief description of the drawings

These objects and other features and advantages of the invention will be explained in more detail in the following part of the present disclosure, using the drawings attached hereto, provided for clarification purposes only and without limitation, in which:

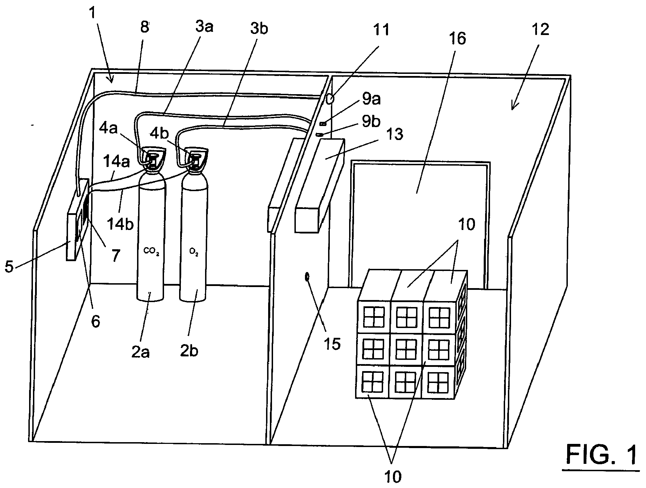

Figure 1 shows a schematic representation of an image drawn in perspective, from an elevated position, associated with an example installation that can be included in the system of the present invention.

### Description of a preferred embodiment

As explained above, the present invention is directed towards a method adapted to be carried out in a system comprising an installation for the treatment of tubers affected by the so-called Guatemalan potato moth, in particular tubers of the type called Canary Island *potatoes* or those of other types, with the use of a composition specifically developed for said application.

In accordance with the objectives pursued by the present invention, the system in which the treatment is carried out is composed of an installation in which two contiguous spaces are distinguished, separated from each other, in which a first space, generally indicated with the numerical reference 1, is intended to contain a set of physical elements and components necessary for the controlled development of the method, and in which a second space, generally indicated with the numerical reference 12, consists of an airtight space to be hermetically closed, which is intended to receive inside the container boxes holding the tubers to be treated, it being necessary that the airtight seal is maintained for the entire duration of the treatment period. Both spaces 1 and 12 are preferably normal rooms, but in relation to space 12 it should be clarified that this must be properly adapted since it constitutes the airtight treatment room, and may have variable dimensions depending on the different volumes of products to be treated.

In the first space 1 are housed, as has been said, the various elements, components and devices by which the entire process can be controlled. In particular, in the interior of the first space 1 shown in the drawing in Figure 1, the basic elements included in the system have been represented, which comprise at least two containers 2a, 2b to contain the CO₂ and O₂ gases under pressure, which, as previously indicated, when mixed with the nitrogen in the existing air in the interior of the treatment space 12, in the appropriate proportions, allow the treatment composition to be obtained. Each of the containers 2a, 2b includes a respective outlet duct 3a, 3b, communicating each of these ducts 3a, 3b with its respective container through a corresponding passage valve 4a, 4b, and said outlet ducts 3a, 3b being connected at the opposite end to a respective supply mouth 9a, 9b that opens in said airtight space 12, at a certain height with respect to the floor of the room, where a number of boxes 10 containing the *potatoes* have been previously placed. In the exemplary embodiment shown in Figure 1, the delivery mouth 9a may be connected through the duct 3a to the container 2a containing CO₂ gas under pressure, and the delivery mouth 9b may be connected through the duct 3b to the container 2b containing O₂, this order is only illustrative of the considered example and does not constitute any limitation on the present invention.

The installation also incorporates a regulation and control cabinet 5 that contains the electrical and electronic means necessary for the regulation and control of the process, said cabinet 5 being equipped with interface means for interacting with an external operator, such as, for example, at least one data display screen 6, preferably a touch screen that includes a keypad 7 for introducing parameters and instructions within the operator's reach. The control and regulation circuitry included in said cabinet 5 is in communication with one or more sensors 11 installed in the airtight treatment space 12 with the product contained in the boxes 10, the electrical communication between the one or more sensors 11 and the circuitry inside cabinet 5 being facilitated by means of a connection 8 through which the data signals generated from the successive readings that are being taken at each moment by said sensors 11 on the proportions of the gases inside the treatment space 12 are provided to said control circuitry inside cabinet 5. In this way, the circuitry included inside said cabinet 5, based on the established programming, detects whether the proportions of each of the gases present in the modified and controlled atmosphere of the interior of space 12 are correct, and if necessary, depending on the fluctuations in the respective concentrations of each of them, activates by acting on one or more of the aforementioned outlet valves 4a, 4b, through a corresponding respective electrical connection 14a, 14b, the supply of any of the gases contained in the respective container 2a, 2b and whose proportion in the modified, controlled atmosphere in the interior of space 12 has fallen below a preset threshold with respect to the nominal concentration expected for that particular gas, thus allowing the proportion of each of the gases in the treatment composition to be rebalanced.

Additionally, as stated above, the automatic supply of the CO₂ and O₂ gases from their respective vessels 2a, 2b under pressure when the ratio fluctuates and falls below a predetermined threshold, is automatically determined based on the values read by the one or more sensors 11, said threshold value being set at a preferred amount of fluctuation in the order of 2%. Of course, this threshold value has been determined to be practically the most appropriate, but it could obviously vary depending on other specific needs.

As mentioned above, inside the second space 12 the tubers are stored that will receive the treatment, contained in boxes 10 of any appropriate type chosen from those existing in the current state of the art. Both the dimensions of the constituent room forming the second space 12 and the number of tubers to be treated, are parameters that can vary since they play an important role in view of the final result of the treatment. Additionally, since the treatment further requires the maintenance of a specific temperature, the incorporation of a conditioning apparatus 13 has been provided for, in which an appropriate fan (not shown) has also been incorporated by means of which an air displacement is caused inside said airtight space 12 to favour the uniformity of concentrations across the entire treatment space.

Apart from the components described above, the system also includes an outlet mouth, identified in the drawing by reference 15, located in a predetermined position at a height to the ground, on one of the side walls delimiting the treatment space 12, intended for the evacuation of the modified internal atmosphere when the treatment of the tubers contained in the boxes or drawers 10 has been completed. This prevents anyone from coming into contact with the modified atmosphere inside space 12, whose gaseous components could be harmful to the person. In addition, the system has also provided for the installation of a door 16, in the opposite position to the side on which the products to be treated are introduced, and whose opening, once the treatment process is completed, allows the boxes or drawers 10 with the product now treated and therefore free from the Guatemalan potato moth, to be deposited directly on a transport vehicle, thus preventing them from passing through areas in which products that have not yet been treated are present that could possibly infect them again.

In accordance with the foregoing, the process associated with the method for treating the tubers contained in the boxes or drawers 10 is clearly evident from description of the installation shown in Figure 1 as given above. Thus, the operator enters the working data through the keyboard 7 included in the cabinet 5, so that the programmable electrical and electronic equipment, included inside said regulation and control cabinet 5, determines the establishment of a gaseous treatment composition inside the airtight second space 12 from the mixture of the CO₂ and O₂ gases contained in the containers 2a, 2b, in combination with the N₂ in the air existing inside space 12 where the boxes or drawers 10 containing the *potatoes* to be treated are located, so that after reading through the one or more sensors 11 included in the system the amount of N₂ present in the environment, the equipment inside the cabinet 5, duly programmed, determines the supply of the CO₂ and O₂ gases, provided through the supply nozzles 9a, 9b, in appropriate quantities so that the mixture inside the airtight second space 12 reaches the previously established proportions for each of the components. Once the preset composition of the mixture has been reached inside the second airtight space 12, the composition is automatically maintained at the established values, in the manner described above, throughout the time for the treatment of the product contained in the boxes or drawers 10. The conditioning apparatus 13 is responsible for maintaining the ambient temperature inside the second space 12 at a preset level, in addition to continuously removing, with its internal fan, the air from the interior to facilitate the movement of the same so that it reaches the entire product with a uniform composition, through the openings or separation spaces provided by the boxes or drawers 10. Once the duration of the treatment process is over, the internal atmosphere is extracted through an outlet mouth 15 for gas evacuation, and finally the boxes or drawers 10 are extracted with the parasite-free tubers through the door 16, as explained above.

As mentioned above, the gaseous composition for the treatment of the tubers consists of the mixture of three different gases: CO₂, O₂ and N₂. The gaseous composition obtained from the mixture of these three components in the appropriate proportions, applied for a predetermined time, has been shown to be particularly effective in treating the Guatemalan potato moth with fully satisfactory results in terms of the elimination of this organism. In one embodiment, the proportions in which the gases that make up the composition are involved are in the following ranges:

| | |
|---|---|
| CO₂ | Between 20% and 45% |
| O₂ | Between 15% and 30% |
| N₂ | Between 35% and 65% |

A particularly preferred gaseous composition is one containing all three components in the following proportions:
30% CO₂,
20% O₂, and
50% N₂,

Through the practical tests carried out in different tests with the use of variable proportions of each of the components, it has been determined that the treatment with a composition based on 30% CO₂, 20% O₂, and 50% N₂, is the most effective, with the result of a 100% mortality of the insect after a treatment time of 10 days

### Trials:

As just mentioned, it was possible to verify the effectiveness of the gaseous composition used to treat the Guatemalan potato moth in different conditions on the basis of various trials carried out at the Canary Islands Institute of Agricultural Research (ICIA). By way of example, and in summary form, some of the respective results obtained are described below:

### Trial 1: Effect on survival of Teciasolanivora (Guatemalan potato moth).

This test was intended to evaluate the effectiveness of the controlled atmosphere for a period of 144 hours (6 days) under semi-industrial conditions, for which *potatoes* affected by the moth were chosen, and the test was carried out in the field, in areas enabled for the collection and removal of *potatoes* affected by this pest. The *potatoes* were selected by visual observation based on the presence of recent galleries, those that had old damage that demonstrated the absence of larvae inside were discarded.

The *potatoes* were placed in three commonly used plastic drawers with dimensions of 0.75 m high, 1.15 m long and 1.00 m wide, with a capacity for about 400 kilos of product. The drawers were stowed in a test laboratory chamber, where the dimensions of the chamber were 2.33 m high, 2.40 m deep and 2.10 m wide. Under these conditions, the treatment gas composition was injected through an orifice, of a type comparable to that of any of the delivery ports indicated by numerical references 9a, 9b in Figure 1, at an approximate height predetermined with respect to the ground. Once the desired atmosphere (30% CO₂, 20% O₂ and 50% N₂) was reached with the gas feed controlled by the circuitry included inside the cabinet 5, the concentration was maintained for 144 hours (6 days) with daily control of the gaseous content inside the chamber. The temperature was maintained between 20-23 °C since the chamber did not have, in this case, a completely airtight seal.

At the same time, 50 to 60 tubers affected by the moth and taken from the same group as those in the drawers were introduced into 7 breeding boxes, but the tubers of these 7 boxes received no treatment and were therefore destined to serve as a control.

After 6 days, the treated *potatoes* were separated from the central area of each of the three drawers, which had been separated at the time of introduction by means of meshes with openings of 1 x 1 cm. Therefore, the tubers in this area were evaluated as being in the worst conditions of contact with the controlled atmosphere. Then, the tubers contained in each of the meshes were introduced into 7 breeding boxes with capacity for 50-60 tubers that were left at room temperature (20-22 °C).

Taking into account the duration of the different insect stages reported by several authors (Notz, 1995; Torres et al., 1997; Rincón, 2002), adult counts were performed in the breeding boxes from the application of the treatment and the control at 2, 8, 13 and 21 days after being removed from the chamber. The results obtained were subjected, using the Statistix 9.0 statistical program, to a variance analysis to determine if there were significant differences between the results obtained, and to a Tukey multiple range test for the separation of means.

The results obtained showed that the total number of adults present in the breeding chambers corresponding to the treatment in each of the drawers under controlled atmosphere had been reduced by a percentage ranging from 84.09% to 96.59%, that is, an average efficacy of 90.91%. However, the treated drawers showed no significant differences between them.

### Trial 2: Effect on organoleptic characteristics.

To carry out this test, aimed at detecting possible organoleptic differences produced by the treatment with modified atmosphere composed of the same gas concentrations as in the previous test and also subjected to treatment for 144 hours (6 days) under semi-industrial conditions, *potatoes* of the variety Negra Oro were used. A tasting was carried out in a room equipped with individual cabins in accordance with the UNE-EN-ISO 8589 standard, for which there were 6 tasters with previous experience in terms of general sensory analysis and sensory analysis of *potatoes.*

The tasting was carried out on three batches of *potatoes,* of which two batches had been treated with the aforementioned gaseous atmosphere and the third batch of *potatoes* used as a control, that is, the latter without having received any treatment. The *potatoes* were stored from exiting the chamber until the tasting (9 days) in open cardboard boxes, at room temperature (T < 25 °C) and protected from light.

On the day of the tasting, 6 tubers per batch were previously separated for study in their raw aspect. These samples were peeled of their skin and stored in water until use. The remaining *potatoes,* unpeeled, were cooked in aluminium cauldrons, after washing the tubers and without adding salt. Cooking of each batch was performed separately and for similar periods of time up to an equivalent point of hardness (first treated batch for T = 15 min, second treated batch for T = 18 min, and untreated control for T = 17 min). To achieve the maximum homogeneity for each batch to be assessed, within each one they were chopped trying as much equality as possible between the pieces, and mixed, making sure that each taster received two or more different pieces of each sample.

The test carried out assessed: 1) raw external appearance by comparison tests carried out in accordance with UNE STANDARD 87016-86, and 2) olfactory-tasting differences between the batches of treated *potatoes* and the untreated control, subjecting the two batches treated to triangular tests compared to the untreated control.

The samples were presented to the tasters on petri dishes and under red light, to mitigate the effect of the aspect on the sensory assessment, and identified with random three-digit codes, and in the proportions and order established by the UNE 87006 standard used. The tasters were advised of the need for an answer (forced trial).

The results derived from this trial showed that:
a) There were no significant differences in the raw aspect between the treated potatoes and the control batch, and
b) No significant sensory differences were observed between the olfactory-gustatory characteristics of the two batches of treated potatoes and the untreated control.

### Trial 3: Effect on production (weight, number and size of tubers) and emergence.

The study was carried out on three varieties of *potatoes:* Negra, Negra Oro and Colorada. The same treatment was applied to these three varieties with a modified atmosphere composed of 30% CO₂, 20% O₂ and 50% N₂ for 96 hours (4 days) in chambers selected for this purpose. After the treatment time had elapsed, the *potatoes* were removed from the chambers, the sprouts were removed and the potatoes weighed. Seed potatoes of each variety treated with said modified atmosphere, and untreated *potatoes* were used. The samples were kept at room temperature until the time of sowing for 3 days. The planting was initially carried out in pots of 22 cm diameter, in a greenhouse, with the use of a 2:1 soil/peat ratio. The design of the plantation was made in random blocks and with 3 repetitions, forming a total of 18 experimental plots. Each experimental plot consisted of 7 plants, that is, a total of 21 plants per treated and untreated variety. The tubers were planted in a horizontal position at a depth of 8 cm, in the centre of each pot, and a first watering was applied. Then, about a month after planting, the pots were moved to the field where they were planted in random blocks. The following parameters were then evaluated:
i) Emergence: From one week after planting in pots, the emergence percentage was measured, and measurements were made twice a week;
ii) Production weight and number of tubers per variety: Harvesting was performed approximately four months after planting and this harvesting was carried out twice with a difference of 4 days;
iii) Production grading: Laboratory production grading was performed for tubers with size < 20 mm, between 20 and 30 mm, between 30 and 40 mm, and finally between 40 and 60 mm.

The results obtained from these checks showed, in relation to the weight of the tubers, that there are no significant differences either between treatments or between varieties, and that the interaction is not significant.

Regarding the number of tubers obtained, it could be seen that the physiological behaviour of the Negra and Negra Oro varieties was similar, while there were significant differences with respect to the Colorada variety. This particular feature has been demonstrated by the various tests carried out to date, where the Negra variety tends to produce tubers of all sizes with numerous *potatoes* in the smaller sizes, while the Colorada variety tends to produce larger tubers and a smaller number of tubers in the smaller sizes. For the size percentages greater than 20 mm there are no significant differences between varieties or between treatments, while for sizes less than 20 mm it was found that there are no significant differences between treatments, although there are differences between varieties.

Finally, as for the emergence percentage deduced from the observations made for different days after planting, it was found that there are no significant differences between treatments or between varieties for any of the evaluated times.

Thus, the comparative results derived from the tests performed can be summarised as follows:
- The percentage reduction for *potatoes* affected by *Teciasolanivora* with respect to the control obtained by applying a modified, controlled atmosphere, composed in this example by 30% CO₂, 20% O₂ and 50% N₂, for 144 hours, was 90.91%;
- No significant differences were observed in the survival of *Teciasolanivora* in the *potatoes* from the three drawers subjected to the modified atmosphere based on 30% CO₂, 20% O₂ and 50% N₂, for 144 hours, but instead a very significant improvement was observed with respect to the control *potatoes* that had not been subjected to treatment;
- The application of the modified atmosphere treatment, controlled, based on the application of the gaseous composition specified above and composed of 30% CO₂, 20% O₂ and 50% N₂, for 144 hours on the variety Negra Oro, did not produce differences in the organoleptic qualities, appearance or olfactory-gustatory component thereof with respect to the batch of untreated *potatoes,* and
- The application of the modified atmosphere treatment, controlled, composed of 30% CO₂, 20% O₂ and 50% N₂, for 96 hours on tubers of the varieties Negra, Negra Oro and Colorada, did not produce significant differences in terms of production (commercial weight, number of tubers and caliber) and emergence with respect to the batch of untreated tubers.

Although the representation shown in Figure 1 shows a first and a second separate space, 1 and 12, independent of each other, and they have been shown viewed from the front and from an elevated position, it should be emphasised that this form of representation has been chosen only for the purposes of illustration and ease of explanation, since both spaces are closed and, in particular, as has been referred to in multiple locations in the present disclosure, the space 12 in which the product to be subjected to treatment is located is furthermore susceptible to being kept airtight for the duration of the treatment, for the maintenance of a modified, controlled atmosphere, without the possibility of escape or leakage of the gasses making up the gaseous composition, in order to guarantee the conservation of the best possible atmosphere for the performance of the treatment.

### Industrial applicability

As can be seen from the foregoing description of a preferred embodiment, the invention is particularly applicable to the treatment of tubers affected by the Guatemalan potato moth *(Teciasolanivora),* for the significant reduction in the incidence of this pest in the tubers, especially on the varieties of potatoes usually known as *Canary Island potatoes.*

It is not deemed necessary to further extend the content of the present description for a person skilled in the art to understand its scope and the advantages derived therefrom, in addition to carrying out the practical embodiment of its object. Notwithstanding the foregoing, experts in the field may understand and determine that within the essentiality of the invention multiple variations of detail may be introduced, which may affect shapes, dimensions and sizes, without deviating from the scope of the invention as defined by the attached claims.

## Claims

1. Method for the treatment of tubers affected by the Guatemalan potato moth pest *(Teciasolanivora),* especially a method specifically designed for the total elimination of the effects derived from the incidence of the Guatemalan potato moth pest on potato tubers both of the type known and usually identified with the name "Canary Island potatoes" and other types of potato, **characterised in that** it comprises:
- arranging a certain quantity of tubers in a multiplicity of conventional boxes or drawers (10), with sizes adapted to the specific volumes of the tubers to be treated, distributed and/or stacked on the surface of the floor in an airtight space (12) for the application of the treatment, and with dimensions adapted to the characteristics of said treatment,
- applying a gaseous composition inside the airtight space (12) where the drawers with the tubers are housed, to create a modified, controlled atmosphere,
- keeping the tubers under the action of that modified, controlled atmosphere, for a set treatment time and at a controlled temperature,
- extracting the constituent gases from the controlled atmosphere through an outlet (15), and
- finally removing the set of boxes or drawers (10) with the now treated product, through a door (16) towards the outside of the enclosure.

2. Method according to claim 1, **characterised in that** said gaseous composition applied to the tuber treatment space comprises a mixture of gases composed of variable proportions of CO₂, O₂ and N₂.

3. Method according to claim 2, **characterised in that** the proportions of each of the components that make up the mixture of the gaseous composition for the treatment of the tubers are comprised in respective intervals of:
| | |
|---|---|
| CO₂ | Between 20% and 45% |
| O₂ | Between 15% and 30% |
| N₂ | Between 35% and 65% |

4. Method according to claims 2 and 3, **characterised in that** the proportion of each of the components that make up the mixture of the gaseous composition for the treatment of the tubers consists of:
30% CO₂,
20% O₂, and
50% N₂.

5. Method according to one or more of claims 1 to 4, **characterised in that** the treatment time of the tubers with the gaseous composition is 10 days (240 hours).

6. Method according to one or more of claims 1 to 5, **characterised in that** the temperature of the treatment space where the drawers with the tubers to be treated are located is in the range 20-23 °C.

7. System for the treatment of tubers affected by the Guatemalan potato moth pest (*Teciasolanivora*)*,* capable for the execution of the method in claims 1 to 6, **characterised in that** it comprises an installation composed of a first space (1) capable of containing the physical elements necessary for the development and realisation of said treatment method, and a second space (12) consisting of an airtight enclosure in which a multiplicity of boxes or drawers (10) containing the tubers that are to be subjected to the action of the gaseous treatment composition are located, wherein:
- the physical elements involved in executing the treatment method on the tubers affected by the Guatemalan potato moth pest include two containers (2a, 2b) each respective one containing one of two pressurised gases, CO₂ and O₂, which are mixed with a third gas, N₂, existing in the air inside the second airtight space (12) to obtain the modified treatment atmosphere;
- a cabinet (5) that includes circuitry with electrical and electronic means, some programmable, for regulation and control, wherein said cabinet (5) is also equipped with at least one data display (6) and a keyboard (7) to interact with an operator,
- the installation further includes a conditioning apparatus (13) intended to maintain the temperature in the second airtight treatment space (12) for the duration, and further including said conditioning apparatus an internal fan intended to circulate the air inside the treatment space (12),
- and wherein the installation components further include an outlet mouth (15) to extract the modified atmosphere after the treatment with the product has been completed, and a door (16) for extracting the set of boxes or drawers (10) with the products now treated towards the outside of the installation.

8. System according to claim 7, **characterised in that** it further comprises ducts (3a, 3b) connected to each of the containers (2a, 2b) through a respective valve (4a, 4b), which at their free end lead into supply nozzles (9a, 9b) open towards the interior of the airtight treatment space (12).

9. System according to claims 7 and 8, **characterised in that** the airtight treatment space (12) further includes one or more sensors (11) responsible for detecting the proportions of each of the gases (CO₂, O₂ and N₂) forming part of the treatment composition, and sending the readings taken to the aforementioned regulation and control cabinet (5) through an electrical connection (8).

10. System according to claims 7 to 10, **characterised in that** it includes a connection between said regulation and control cabinet (5) with each of the valves (4a, 4b) associated with each of the pressure gas containers (2a, 2b), for the purpose of actuating these valves to supply an amount of each gas at the time when the readings made by the sensors (11) indicate to the circuitry included inside the regulation and control cabinet (5) the need to feed one or more of said gases due to a decompensation in the proportions of either of them in the treatment composition.

11. Composition for the treatment of tubers affected by Guatemalan potato moth pest (*Teciasolanivora*)*,* applicable to a second space (12) in which are housed drawers (10) containers containing the tubers to be treated, **characterised in that** it consists of a gaseous composition obtained by combining CO₂, O_{2 and N 2} gases in proportions ranging from:
| | |
|---|---|
| CO₂ | Between 20% and 45% |
| O₂ | Between 15% and 30% |
| N₂ | Between 35% and 65% |

12. Composition according to claim 12, **characterised in that** it consists of the combination of the gases N₂, O₂ and CO₂ in proportions:
30% CO₂
20% O₂ and
50% N₂

13. Composition according to claims 12 and 13, **characterised in that** the permissible fluctuations in each of the gases of the composition are comprised in a threshold of a maximum of 2%, being fed automatically, by means of the control exercised by the circuitry included in the cabinet (5), a sufficient amount of any of the gases that is outside said threshold, to compensate for any fluctuation and restore the proportions of the composition.
